Europäisches Patentamt

**European Patent Office**

**Office européen des brevets**

(11) Veröffentlichungsnummer: **0 280 851 B1**

# (12) EUROPÄISCHE PATENTSCHRIFT

(45) Veröffentlichungstag der Patentschrift: 24.04.91

(51) Int. Cl.5: **C09C 1/30**, C01B 33/18, B30B 5/04, B01J 2/22

(21) Anmeldenummer: 88100580.5

(22) Anmeldetag: 16.01.88

Die Akte enthält technische Angaben, die nach dem Eingang der Anmeldung eingereicht wurden und die nicht in dieser Patentschrift enthalten sind.

(54) **Verfahren zum Verdichten von pyrogen hergestellter Kieselsäure.**

(30) Priorität: 26.02.87 DE 3706137
10.12.87 DE 3741846

(43) Veröffentlichungstag der Anmeldung:
07.09.88 Patentblatt 88/36

(45) Bekanntmachung des Hinweises auf die Patenterteilung:
24.04.91 Patentblatt 91/17

(84) Benannte Vertragsstaaten:
AT BE CH DE ES FR GB IT LI LU NL SE

(56) Entgegenhaltungen:
EP-A- 0 010 655
DD-A- 43 981
DE-B- 1 129 459

(73) Patentinhaber: **Degussa Aktiengesellschaft**
**Weissfrauenstrasse 9**
**W-6000 Frankfurt am Main 1(DE)**

(72) Erfinder: **Klingel, Reinhard, Dr.**
**Taunusstraat 6**
**W-8755 Wasserlos(DE)**
Erfinder: **Manner, Reinhard, Dr.**
**Bonhoefferstrasse 17**
**W-6457 Dörnigheim(DE)**

## Beschreibung

Die Erfindung betrifft ein Verfahren zum kontinuierlichen Verdichten von pyrogen hergestellter Kieselsäure.

Es ist bekannt, pulverförmige Stoffe zu verdichten, indem man Unterdruck und mechanischen Druck an rotierenden gasdurchlässigen Flächen anwendet. Dabei bewegt sich die gesamte Filterfläche, die nicht der mechanischen Verdichtung dient oder mit mechanisch verdichtetem Material bedeckt ist, innerhalb eines geschlossenen Gehäuses in dem zu verdichtendem Material und fördert das Material zur Verdichtungsstelle. Vor der Verdichtung wird die Schichtdicke des unverdichteten Materials auf der Walze mittels eines Schabers eingestellt.

Das verdichtete Material wird mittels Abstreifvorrichtungen von den Wazen abgenommen und fällt nach unten zur Verpackung ab (DE-AS 11 29 459).

Bei Walzen mit einer Gewebebespannung muß der Schaber einen Mindestabstand von der Walzenoberfläche einhalten und kann somit die verdichtete Kieselsäure nicht vollständig abstreifen.

Die daraus resultierende Restschicht erweist sich von großem Nachteil. Zum einen wird hierdurch eine nicht unbeträchtliche Fördermenge festgehalten und zum anderen wird die Druckdifferenz an den Walzen so stark vermindert, daß der Verdichtungsgrad abnimmt.

Das bekannte Verfahren weist den Nachteil auf, daß eine sehr starke Verdichtung notwendig ist, um den Verlust an Verdichtung durch die Auflockerung des Produktes auf dem Weg von der Verdichtungsvorrichtung bis zur Abpackmaschine auszugleichen. Zur Erzielung eines bestimmten Verdichtungsgrades in der Verpackung ist es also notwendig, an der Verdichtungsvorrichtung eine wesentlich höhere Verdichtung einzustellen. Dabei ist die Gefahr gegeben, daß aufgrund der hohen Verdichtung die anwendungstechnischen Eigenschaften der pyrogen hergestellten Kieselsäure, verlorengehen.

Es ist bekannt, Acetylenruß durch Anwenden von mehreren Preßwalzen und umlaufenden Preßband in Verbindung mit Unterdruckan einer als Vakuumdrehtrommel ausgebildeten rotierenden Walze zu verdichten.

Der Acetylenruß wird frei fließend von oben einem sich verjüngenden Einzugsspalt zwischen einer in diesem Abschnitt unter Vakuum stehenden, mit Filtertuch und Siebmantel versehenen rotierenden Drehtrommel und einer rotierenden Einzugswalze mit umlaufendem luftdurchlässigem, elastischem Preßband zugeführt, vorverdichtet und zwischen der in diesem Abschnitt ebenfalls unter Vakuum stehenden rotierenden Drehtrommel und dem mitlaufenden elastischen, luftundurchlässigen Preßband in Verbindung mit mechanischem Druck rotierender, auf das Preßband wirkender Preßwalzen verdichtet (DDR-PS 43981).

Dieses bekannte Verfahren hat den Nachteil, daß es für die Verdichtung von pyrogen hergestellter Kieselsäure nicht anwendbar ist.

Bewegte pyrogen hergestellte Kieselsäure verhält sich im Gemisch mit Luft im Gegensatz zu dem Acetylenruß wie eine dünnflüssige Flüssigkeit.

Die Zugabe der frei fließenden pyrogenen Kieselsäure in den Einzugsspalt der bekannten Vorrichtung führt dazu, daß die pyrogene Kieselsäure wie Wasser aus der Vorrichtung herausfließt. Eine kontrollierte Verdichtung ist somit nicht möglich.

Es stellt sich somit die Aufgabe, ein Verfahren zu entwickeln, mittels der feinteilige Kieselsäure, die auf pyrogenem Wege hergestellt wurde, kontinuierlich verdichtet werden kann, wobei der in der Verdichtungsvorrichtung erzielte Verdichtungsgrad des verdichteten Produktes bis zum Verlassen der Abpackvorrichtung erhalten bleibt.

Gegenstand der Erfindung ist ein Verfahren zum Verdichten von pyrogen hergestellter Kieselsäure, welches dadurch gekennzeichnet ist, daß man die pyrogen hergestellte Kieselsäure mittels eines Vakuum-Drehfilters, der mit einem Preßband ausgestattet ist, verdichtet, wobei die pyrogen hergestellte Kieselsäure in einem Behälter vorgelegt wird, der Vakuum-Drehfilter innerhalb dieses Behälters beweglich angeordnet ist und die Ablösung der Schicht des verdichteten Produktes von der Filtertrommel durch Unterbrechung des Vakuums erfolgt.

In einer bevorzugten Ausführungsform der Erfindung wird die pyrogen hergestellte Kieselsäure in einem Behälter vorgelegt, wobei der Vakuum-Drehfilter innerhalb dieses Behälters beweglich angeordnet ist.

Der erfindungsgemäß verwendete Drehfilter ist eine bekannte und im Handel erhältliche Vorrichtung, die bisher zur Abtrennung von Feststoffen aus Flüssigkeiten verwendet wurde.

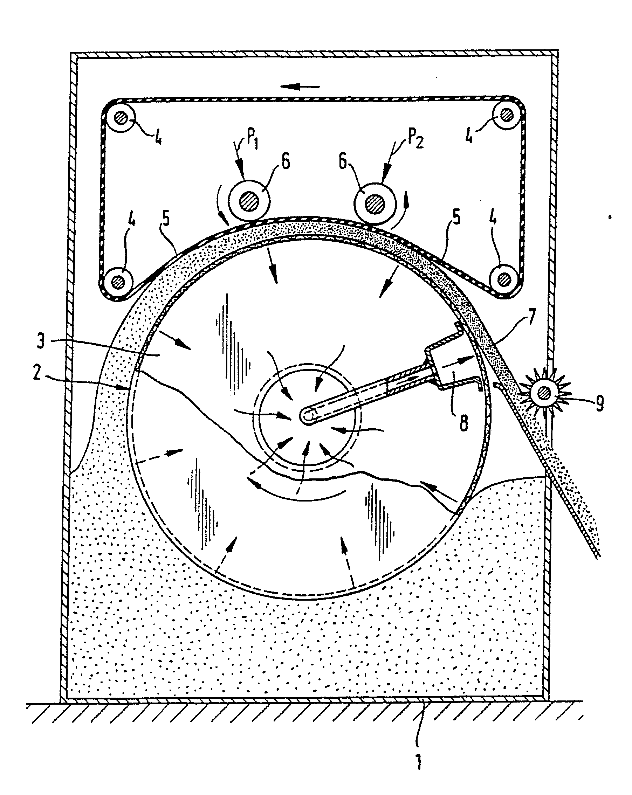

Die Funktionsweise des erfindungsgemäß eingesetzten Drehfilters bzw. das erfindungsgemäße Verfahren wird an Hand der Zeichnung näher erläutert:

Die Figur zeigt den Produktvorratsbehälter 1, der zum Teil mit pyrogen hergestellter Kieselsäure gefüllt ist. In diesem Produkt dreht sich die Filtertrommel 2 mit ihrer Saugseite 3.

Der Verdichtungsgrad wird über die Vorspannung des Preßbandes 5 und insbesondere über die Anpreßrollen 6 eingestellt, wobei das Preßband zusätzlich über die Umlenkrollen 4 läuft.

2

Die Preßkraft P1, P2 kann pneumatisch oder hydraulisch aufgebracht werden. Die Anzahl der Anpreßrollen kann variabel sein. Bevorzugt werden 1 bis 3 Anpreßrollen eingesetzt.

Die verdichtete pyrogen hergestellte Kieselsäure 7 wird an der Filtertrommel-Rückblaszone 8 von der Filtertrommel entfernt und mittels der Stachelradwalze 9 zerkleinert.

Die Verwendung der Stachelwalze 9 zum Zerkleinern der Schicht des verdichteten Produktes ist jedoch nicht unbedingt notwendig.

Die Filtertrommel kann mit beliebiger Drehzahl, bevorzugt mit 0,1 bis 10 Umdrehungen pro Minute betrieben werden. Durch die Drehzahl wird jedoch nicht die Qualität der Verdichtung sondern nur der Durchsatz an Menge beeinflußt.

Das erfindungsgemäße Verfahren ist ein kontinuierliches Verfahren, bei dem der einmal erreichte Verdichtungsgrad erhalten bleibt. Eine Wiederbelüftung des verdichteten Produktes findet nicht statt.

Die Ablösung der Schicht des verdichteten Produktes von der Filtertrommel erfolgt durch eine Unterbrechung des Vakuums. Durch Abblasen mit nur geringem Luftdruck von 0,3 bar entgegen der ursprünglichen Filtrationsrichtung kann die Ablösung unterstützt werden.

Die Ablösung erfolgt vollständig, so daß eine Abstreifvorrichtung bzw. eine Austragsvorrichtung nicht erforderlich ist.

Der Filter wird nicht durch anhaftendes Produkt zugesetzt, da keine umlaufende Restschicht vorhanden ist.

Es treten dadurch keine unerwünschten Druckverluste auf, d. h., die gesamte Druckdifferenz ist wirksam.

Der Drehfilter ist einfach gebaut. Die Tuchbespannung ist billig und ohne Demontage der Trommel austauschbar.

Es sind keine teuren Sintermetallwalzen notwendig.

Die Regulierung des Verdichtungsgrades erfolgt mit Druckluft oder hydraulisch und nicht über die Walzenspaltbreite.

Der Verdichtungsgrad des Produktes kann in weiten Bereichen mit der gleichen Maschine einfach und schnell geändert werden. Der gezielte Verdichtungsverlauf kann durch mehrere Anpreßrollen eingestellt werden. Für eine konstante Verdichtung ist keine isostatische Lagerung notwendig.

Es erfolgt eine schonende, gleichmäßige Verdichtung auf der gesamten Fläche der Trommel ohne eine Scherung des Produktes.

In einer bevorzugten Ausführungsform des erfindungsgemäßen Verfahrens erfolgt eine langsame Dichtesteigerung im Eingangsbereich des Bandes.

Der Verdichtungsgrad des Produktes ist mindestens genauso groß wie bei den bekannten Verdichtungsverfahren. Überraschenderweise wird bei der Verdichtung von pyrogen, auf dem Wege der Flammenhydrolyse hergestellter Kieselsäure mit dem erfindungsgemäßen Verfahren eine höhere Verdichtung als mit bekannten Verfahren erzielt. Aufgrund der allmählichen Steigerung der Verdichtung wird im Gegensatz zu der bekannten schnellen kurzzeitigen Verdichtung mit hohen Kraftspitzen im Walzenspalt eine schonende Dichtesteigerung erreicht. Dies hat zur Folge, daß die anwendungstechnischen Eigenschaften der pulverförmigen Substanz in größerem Ausmaß erhalten bleiben als bei den bekannten Verdichtungsverfahren.

Die verdichtete, pyrogen auf dem Wege der Flammenhydrolyse hergestellte Kieselsäure ist leicht dispergierbar in Silikonkautschuk.

Trotz der wesentlich höheren Verdichtung der Kieselsäure weist die Silikonmasse die gleiche Transparenz auf. Es werden keine Stippen festgestellt.

Beispiele:

a) Verdichtung von Aerosil 200 (Siloware) mittels der erfindungsgemäßen Vorrichtung

```
Stampfdichte von          140   - 190 g/l

Druck an Preßwalzen         0   -   8 bar

Anzahl der Preßwalzen       3

Bei der Walzenverdichtung wurde nur einer Stampfdichte
von 100 g/l erzielt.
```

EP 0 280 851 B1

b) Verdichtung von Aerosil R 972 (hydrophob) mittels der erfindungsgemäßen Vorrichtung

```
Stampfdichte von      90 - 120 g/l
dieselben Preßbedingungen
Bei der Walzenvorrichtung wurde nur eine Stampfdichte
von 64 g/l erzielt.
```

Aerosil 200 ist eine pyrogen, auf dem Wege der Flammenhydrolyse von $SiCl_4$ hergestellte Kieselsäure.
Aerosil R972 ist eine pyrogen, auf dem Wege der Flammenhydrolyse von $SiCl_4$ hergestellte Kieselsäure, die hydrophobiert wurde.

## Ansprüche

1.  Verfahren zum Verdichten von pyrogen hergestellter Kieselsäure, dadurch gekennzeichnet, daß man die pyrogen hergestellte Kieselsäure mittels eines Vakuum-Drehfilters, der mit einem Preßband ausgestattet ist, verdichtet, wobei die pyrogen hergestellte Kieselsäure in einem Behälter vorgelegt wird, der Vakuum-Drehfilter innerhalb dieses Behälters beweglich angeordnet ist und die Ablösung der Schicht des verdichteten Produktes von der Filtertrommel durch Unterbrechung des Vakuums erfolgt.

## Claims

1.  A process for compacting pyrogenically produced silica, characterised in that the pyrogenically produced silica is compacted by means of a vacuum rotary filter equipped with a pressure band, the pyrogenically produced silica being introduced into a container, the vacuum rotary filter being movably arranged inside this container and the layer of compacted product being detached from the filter drum by interruption of the vacuum.

## Revendications

1.  Procédé de compression de silice pyrogénique, caractérisé en ce que l'on comprime la silice pyrogénique à l'aide d'un filtre tournant sous vide qui est pourvu d'une bande de pressage, la silice pyrogénique étant introduite dans un récipient, le filtre tournant sous vide étant disposé mobile à l'intérieur de ce récipient et en ce que le retrait de la couche de produit comprimé du tambour de filtration s'effectue par interruption du vide.